Europäisches Patentamt

European Patent Office

Office européen des brevets

(19)

(11) Veröffentlichungsnummer: **0 447 749 A2**

# (12) EUROPÄISCHE PATENTANMELDUNG

(21) Anmeldenummer: **91100428.1**

(22) Anmeldetag: **16.01.91**

(51) Int. Cl.5: **H04J 3/16**

(30) Priorität: **19.03.90 DE 4008727**

(43) Veröffentlichungstag der Anmeldung:
**25.09.91 Patentblatt 91/39**

(84) Benannte Vertragsstaaten:
**DE FR GB IT NL**

(71) Anmelder: **AEG KABEL Aktiengesellschaft**
**Bonnenbroicher Strasse 2-14**
**W-4050 Mönchengladbach 2(DE)**

(72) Erfinder: **Meyers, Norbert**
**Schillerstrasse 25**
**W-4055 Niederkrüchten 1(DE)**
Erfinder: **Hildebrandt, Georg, Dr.**
**Neuenhaus 16**
**W-5600 Wuppertal 12(DE)**

(54) **Verfahren zum Übertragen von Daten unterschiedlicher Rate.**

(57) Bei einem Verfahren zum bidirektionalen Übertragen von Daten zwischen einer zentralen vermittlungsseitigen Multiplex-Einrichtung und mehreren teilnehmerseitigen Multiplex-Einrichtungen, die einerseits über einen passiven Bus miteinander verbunden sind und andererseits Verbindungen zu anderen Teilnehmern herstellen, ist vorgesehen, daß ein periodisch wiederholter Zeitrahmen in feste Zeitintervalle aufgeteilt wird, die über Multiplex-Einrichtungen eindeutig einem Teilnehmer zugeordnet sind, und daß in den Zeitintervallen unterschiedliche Datenraten übertragen werden.

Die Erfindung betrifft ein Verfahren zum Übertragen von Daten unterschiedlicher Rate nach dem Oberbegriff des Anspruchs 1. Die Zeitmultiplextechnik ist bekannt. In der Regel handelt es sich um synchrone Übertragungsverfahren, d.h. Daten werden mit einer konstanten Bitrate übertragen, wobei es einen Rahmen gibt, der in verschiedene Zeitintervalle unterteilt ist. In jedes Zeitintervall wird Information - beispielsweise für einen Teilnehmer - gepackt, so daß man eine Mehrfachausnutzung der Übertragungsleitung erreicht. Um die Zuordnung der einzelnen Zeitintervalle zu einzelnen Teilnehmern zu gewährleisten, schickt man beispielsweise am Anfang eines Rahmens Kennungswörter, die dessen Anfang kennzeichnen.

Die Aufgabe der Erfindung besteht darin, einen Zeitmultiplexrahmen zu entwickeln, der es ermöglicht, Daten mit unterschiedlichen Raten in einem Zeitrahmen zu synchronisieren. Diese Aufgabe wird gemäß der Erfindung durch die im Kennzeichen des Anspruchs 1 erwähnten Merkmale gelöst. Weiterbildungen der Erfindung sind in den Unteransprüchen enthalten.

Ausführungsbeispiele der Erfindung werden nachstehend anhand der Zeichnung näher erläutert; dabei zeigt:

Figur 1     ein Übertragungssystem,

Figur 2     einen Zeitrahmen,

Figur 3     ein Blockschaltbild einer Teilnehmergruppen-Anschalteinheit,

Figur 4     ein Blockschaltbild einer zentralen Anschalteinheit,

Figur 5     ein weiteres Blockschaltbild einer zentralen Anschalteinheit.

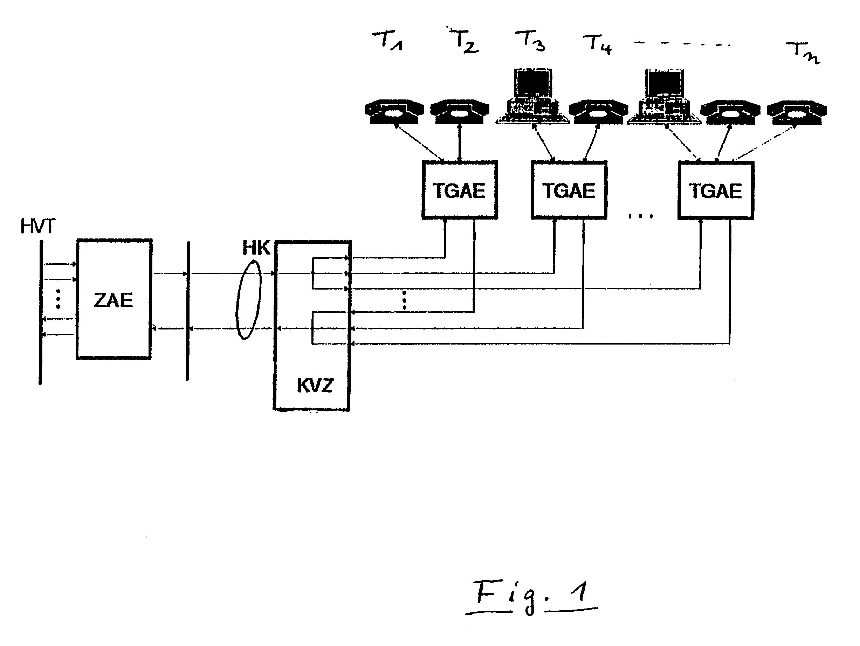

Die Erfindung wird beispielsweise in lokalen Netzen mit optischer Übertragung angewendet. Will man in den einzelnen Zeitintervallen eines Zeitrahmens variable Datenraten zulassen, so ist den einzelnen Teilnehmern $T_1$ , $T_2$ ... $T_n$ zunächst mitzuteilen, wo der Beginn des Rahmens liegt. Dies bezieht sich auf den Empfang eines Datenstroms, der über eine gemeinsame Leitung, d.h. das Hauptkabel HK (s. Figur 1), den Kabelverzweiger KVZ und die teilnehmerseitige Multiplex-Einrichtung oder Teilnehmergruppen-Anschalteinheit TGAE zu den einzelnen Teilnehmern gelangt. In der Gegenrichtung ordnet die TGAE dem sendenden Teilnehmer eines der freien Zeitintervalle zu und sendet die Information an die zentrale Multiplex-Einrichtung ZAE. Diese ist Teil eines privaten oder öffentlichen Netzes.

Die Schwierigkeit besteht darin, daß von den Teilnehmern unterschiedliche Frequenzen, d.h. Datenraten angeboten oder benutzt werden und man im Prinzip eine gemeinsame Datenrate benötigt, um allen Teilnehmern $T_1$ , $T_2$ ... $T_n$ mitzuteilen, wo der Beginn des Rahmens liegt. Eine zweite Lösung wäre eine Rahmenkennung zu senden, die auf einem analogen Verfahren beruht, bei dem der Empfänger nicht gezwungen ist, eine gemeinsame Datenrate zu verstehen.

Wie in Fig. 1 dargestellt, gelangen alle Daten vom Hauptverteiler HVT zu einer zentralen Anschalteinheit ZAE, die gesondert dargestellt und besprochen wird.

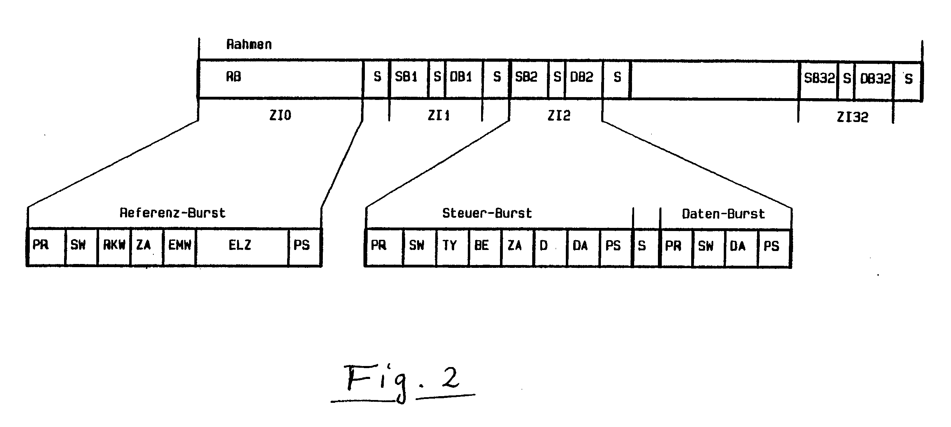

In Figur 2 wird ein Zeitrahmen dargestellt, in dem eine gemeinsame Datenrate für alle Empfänger oder Teilnehmer $T_1$ , $T_2$ ... $T_n$ benutzt wird, um diesen den Anfang eines Rahmens kenntlich zu machen. Teilt man den Übertragungsrahmen beispielsweise in 33 Zeitintervalle ZI auf, die einem Referenz-Burst ZI0 und 32 Teilnehmern ZI1-ZI32 zugeordnet sind, so kann man in jedem Zeitintervall einen Steuer-Burst SB1 ....SB32 senden, d.h. ein Paket oder Impulsfolge (Burst) mit einer festen Rate, das für jeden Teilnehmer verständlich ist und den restlichen Teil des Zeitintervalls für einen Daten-Burst DB mit einer variablen Datenrate D benutzen. Hier ist nur das Zeitintervall ZI2 gezeichnet; ZI1 ... ZI32 sind ebenso aufgebaut. In den Steuer-Burst SB mit der festen Rate wird dann die Information gelegt, die den darauf folgenden Daten-Burst mit variabler Datenrate D kennzeichnet, um es dem Empfänger zu ermöglichen, rechtzeitig auf die ausgewählte variable Frequenz umzuschalten (über eine Frequenzinformation). Neben dieser Frequenzinformation kann dieser Steuer-Burst SB zusätzlich die Ziel-Adresse ZA für den darauf folgenden Burst tragen und somit der Empfängerschaltung mitteilen, daß jetzt ein Zeitintervall zu seiner Verfügung steht. Dies ist insbesondere deshalb wichtig, damit ein Empfänger, der die Informationen, die für ihn bestimmt sind oder für andere Teilnehmer, mit einer zeitlichen Maske ein- bzw. ausblenden kann. Es ist vorstellbar, daß es sonst durch die unterschiedlichen Datenraten in den Zeitintervallen zu Störungen kommen kann.

In der Regel wird es so sein, daß der Empfänger den Datenstrom untersucht, sich die Steuer-Bursts SB aller Teilnehmer ansieht und auswertet und dann nach der Adresse entscheidet, ob ein Steuer-Burst an ihn gesendet worden ist. Alle Steuer-Bursts eines Rahmens, die er als für sich gesendet registriert hat, werden zusammen mit den zugehörigen Daten-Bursts im Empfänger durchgeschaltet, alle anderen werden frühzeitig in den Vorverstärkern des Empfängers blockiert, so daß es nicht zu Störungen kommen kann. Zur Steuerung dieser zeitlichen Maske wird außerdem die Länge des Bursts mit variabler Datenrate übertragen, so daß man die Maske sehr genau zeitlich steuern kann.

Im folgenden wird der Rahmenaufbau an einer bevorzugten Ausführungsform der Erfindung und im Detail geschildert. Der Rahmen (Figur 2) besteht aus 33 Zeitintervallen, die reihum gesendet werden. Im Zeitintervall 0 befindet sich der Referenz-Burst RB. Dieser hat die Aufgabe den Beginn eines Rahmens zu kennzeichnen und dient außerdem der Entfernungsmessung zwischen Zentrale und Teilnehmer. In den verbleibenden 32 Zeitintervallen ZI1 ... ZI32 werden Steuer- und Daten-Bursts gesendet. Zwischen den einzelnen Zeitintervallen befinden sich Schutzzeiten S. Innerhalb der Zeitintervalle werden Steuer- und Daten-Burst ebenfalls durch Schutzzeiten voneinander getrennt. Die Referenz- und Steuer-Bursts besitzen eine feste Datenrate, die von allen Empfängern in der Zentrale und beim Teilnehmer verstanden werden.

Im folgenden sollen die unterschiedlichen Bursts näher erläutert werden. Der Steuer-Burst besteht aus PR: Präambel, SW: Startwort, TY: Type, BE: Belegung, ZA: Zieladresse, D: Datenrate, DA: Daten und PS: Prüfsumme. Die Präambel liefert dem Empfänger in der Zentrale bzw. beim Teilnehmer die notwendige Taktinformation, um die Bitsynchronität für den Steuer-Burst herzustellen. Das Startwort kennzeichnet den Beginn der relevanten Information. Im Type-Feld TY steht die Information, ob im entsprechenden Zeitintervall die Nutzdaten in einem getrennten Daten-Burst DB oder im Daten-Feld DA des Steuer-Bursts übertragen werden. Bei der Übertragung im Steuer-Burst SB, füllt dieser das gesamte Zeitintervall aus. Das Belegungs-Feld BE zeigt an, ob Nutzdaten im Datenfeld übertragen werden oder nicht. Die Zieladresse ZA dient der Adressierung eines Teilnehmers. Das Datenraten-Feld D übergibt dem Empfänger in der Zentrale bzw. beim Teilnehmer die Information, mit welcher Datenrate der Daten-Burst DB im gleichen Zeitintervall übertragen wird.

Hierbei kann es sich um eine für den Empfänger unbekannte Datenrate handeln, die ihm exakt mit entsprechender Fehlersicherung mitgeteilt wird, um sich auf den darauffolgenden Daten-Burst synchronisieren zu können. Voraussetzung ist allerdings, daß der Empfänger auf die jeweilige Datenrate programmierbar ist, bzw. daß er einen großen Bereich von Datenraten verarbeiten kann. Da es optische Empfänger gibt, die beispielsweise Datenraten zwischen 1 MBit/s und 50 MBit/s verarbeiten können, indem man beispielsweise die Taktrückgewinnungsschaltung auf ein von ca. 50 vorhandenen Frequenzbändern programmiert, reicht es in diesem Fall, wenn man eine Kennung zu dem für die zu übertragende Datenrate relevanten Frequenzband sendet. Die Prüfsumme PS wird sendeseitig über alle Bits zwischen Beginn des Type-Feldes und Ende des Daten-Feldes gebildet und mitübertragen. Beim Empfänger besteht somit die Möglichkeit, Übertragungsfehler aufzuspüren.

Der Daten-Burst besteht aus PR: Präambel, SW: Startwort, DA: Daten und PS: Prüfsumme. Da bereits im Steuer-Burst die Belegung, Zieladresse und Datenrate des Daten-Bursts übermittelt wird, können diese Angaben im Daten-Burst entfallen. Der Daten-Burst besitzt eine eigene Präambel PR, die auch hier der Bitsynchronisation dient. Darauf folgt das Startwort SW, welches den Beginn der Nutzdaten kennzeichnet. Die Nutzdaten werden ins Daten-Feld DA gepackt und die über diese Nutzdaten berechnete Prüfsumme in dem darauffolgenden Prüfsummen-Feld PS übertragen.

Der Referenz-Burst besteht aus PR: Präambel, SW: Startwort, RKW: Rahmenkennungswort, ZA: Zieladresse, EMW, Entfernungsmeßwort, ELZ: Echolaufzeit und PS: Prüfsumme. Der Referenz-Burst beginnt ebenfalls mit Präambel und Startwort. Das Rahmenkennungswort kennzeichnet den Beginn eines neuen Rahmens. Die darauffolgende Zieladresse ZA adressiert den Teilnehmer, der im laufenden Rahmen eine Entfernungsmessung durchführen soll, indem er den empfangenen Referenz-Burst unmittelbar nach Erkennen des Rahmenkennungswortes, seiner eigenen Adresse und des Entfernungs-Meßwortes EMW zurück zur Zentralen Anschalteinheit ZAE sendet. Die Echolaufzeit ELZ ist die im Rahmen reservierte Zeit, die der Teilnehmer zum Zurücksenden des Echos über das LWL-Kabel benötigt. Die Prüfsumme PS wird über alle Bits der Zieladresse, des Entfernungsmeßwortes und der Echolaufzeit gebildet.

Der Daten-Burst mit der variablen Datenrate kann also in einem Zeitintervall auch wegfallen (oder auch in mehreren Zeitintervallen), so daß nur noch der Steuer-Burst existiert. Dann enthält der Steuer-Burst SB auch den Datenteil mit den Nutzdaten. Die vor dem Datenteil stehenden Informationen über Adresse, Länge und Frequenz beziehen sich in dem Fall auf den Burst selbst. Die Frequenzangabe ist in diesem Fall uninteressant, da alle Empfänger die feste Frequenz oder Datenrate verarbeiten können. Der Vorteil dieser Maßnahme besteht darin, daß es auch sehr preiswerte Empfänger geben kann, die nur mit dieser festen Datenrate empfangen und dennoch in dem gemischten System arbeiten können.

Alternativ zu der in Figur 2 angegebenen Rahmenstruktur ist es auch vorstellbar, daß man in einem Rahmen alle Steuer-Bursts zu einem Burst zusammenfaßt und in diesem zentralen Steuer-Burst alle relevanten Informationen über alle Zeitintervalle im Rahmen zusammenfaßt und z.B. eine Tabelle verwaltet, in der die Zuordnung der einzelnen Zeitintervalle zu den Teilnehmern festgelegt wird und außerdem die Frequenzinformation für jedes Zeitintervall enthalten ist. Wählt man eine feste Rahmenlänge und teilt diese Rahmenlänge in eine feste Anzahl n + 1 von Zeitintervallen - in unserem Beispiel ist die Zahl der Teilnehmer 32 - auf, so spielt die Übermittlung der Burst-Länge keine Rolle.

Zwischen den einzelnen Bursts befinden sich Schutzzeiten S. Diese Schutzzeiten S müssen beim Betrieb auf einem Bus optischer oder elektrischer Art immer so groß gewählt werden, daß es keine Kollision von Daten gibt. Um diese Lücken dennoch kürzer zu gestalten und eine bessere Ausnutzung der Datenleitungen zu gewährleisten, wird zunächst ein Referenz-Burst RB geschickt, der die Laufzeiten zu den einzelnen Teilnehmern meßbar macht. Der Referenz-Burst besitzt eine interne Kennung. Sobald der Teilnehmer den Referenz-Burst erkennt und seine Adresse darin findet, soll er diesen Referenz-Burst - quasi als Echo - direkt zurücksenden, so daß die Zentrale über die Laufzeit des Burst bis zum Teilnehmer und zurück messen kann, wie groß die Laufzeit bis zum Teilnehmer ist. Daraus kann abgeleitet werden, mit wieviel Verzögerung der Teilnehmer in der Rückrichtung senden muß, um kollisionsfrei zu senden. Dadurch kann man die Lücke beispielsweise auf einige Bitstellen reduzieren, so daß man eine bessere Ausbeute in der Datenrate erhält.

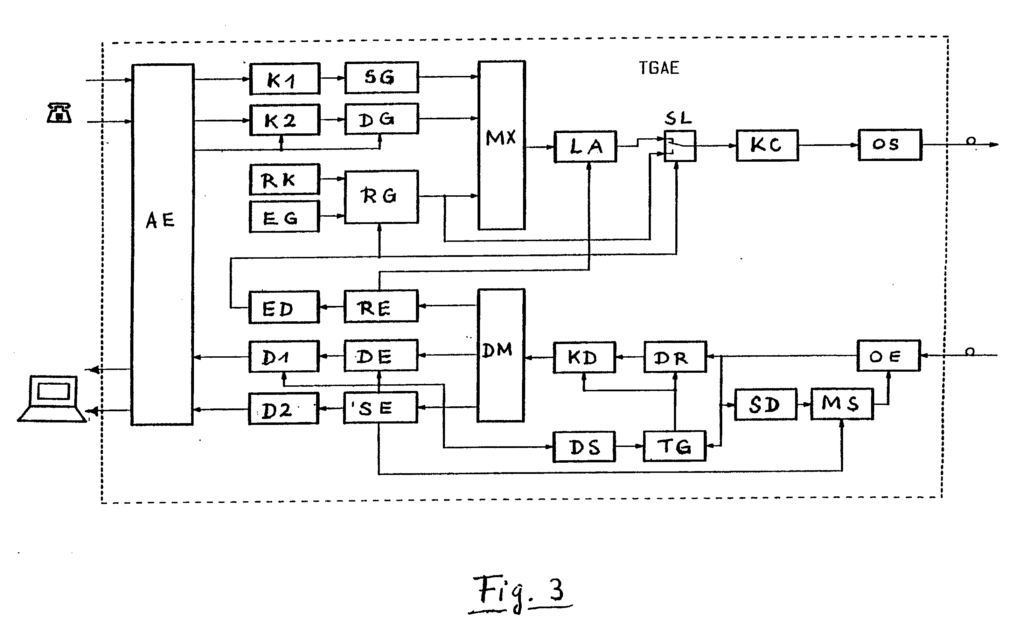

Im folgenden wird ein bevorzugtes Ausführungsbeispiel der Erfindung für die Teilnehmergruppen-Anschalteinheit TGAE anhand des Blockschaltbildes der Fig. 3 beschrieben. Man bekommt die Zeitmultiplexsignale über eine LWL-Leitung in den optischen Empfänger OE. Die Teilnehmergruppen-Anschalteinheit TGAE in Fig. 3 erhält von der Zentralen Anschalteinheit ZAE, welche anschließend beschrieben wird, einen Zeitmultiplexrahmen, der in den einzelnen Zeitintervallen unterschiedliche Datenraten D trägt (s. Fig. 2). Der optische Empfänger OE arbeitet breitbandig und kann alle - bzw. die für die Dienste beim Teilnehmer benötigten - Datenraten verarbeiten. Der Signaldetektor SD meldet der Maskierungssteuerung MS, wann ein gültiger Burst am Ausgang des optischen Empfängers anliegt. Die Maskierungssteuerung MS kann den Referenz-Burst RB eindeutig an seiner Länge erkennen und daraus ein Zeitmaske generieren, die den optischen Empfänger OE zunächst nur für die Referenz- und Steuer-Bursts transparent schaltet. Die Taktrückgewinnung TG ist zunächst auf die feste Datenrate der Referenz- und Steuer-Bursts programmiert. Diese Bursts werden im Daten-Regenerator DR zeitlich regeneriert und im Kanal-Decoder KD decodiert. Der Demultiplexer DM leitet die Referenz- und Steuer-Bursts zu den jeweiligen Burst-Empfängern. Diese trennen die Nutzinformation von Präambel und Startwort, berechnen die Prüfsummen und vergleichen diese mit der übertragenen Prüfsummen.

Der Referenzburst-Empfänger RE wertet zusätzlich das Rahmenkennungswort RKW aus und vergleicht die empfangene Zieladresse mit der eigenen TGAE-Adresse. Stimmen die Adressen überein, so wird das Entfernungsmeßwort EMW an den EMW-Detektor weitergeleitet. Empfängt dieser ein richtiges EMW, so gibt er dem Referenzburst-Generator den Befehl, einen Referenz-Burst zu erzeugen. Gleichzeitig wird eine Schleife geschaltet, die den so erzeugten Referenz-Burst zurück zur ZAE sendet.

Der Steuerburst-Empfänger SE wertet die Zieladresse ZA im Steuer-Burst aus. Entspricht diese der eignen TGAE-Adresse, so entscheidet die Information im Typfeld, ob ein Daten-Burst mit Nutzdaten folgt, oder die Nutzdaten im Datenfeld des Steuer-Bursts stehen. Wenn auf den Steuer-Burst ein belegter Daten-Burst folgt, so wird die Datenrate dem Datenburst-Empfänger DE und der Datenraten-Steuerung DS mitgeteilt. Am Ende des Steuer-Bursts werden die Taktrückgewinnungsschaltung TG und der Datenburst-Empfänger DE automatisch auf die neue Datenrate umprogrammiert. Die Umprogrammierung muß während der Schutzzeit S zwischen Steuer- und Daten-Burst erfolgen. Am Ende des Daten-Bursts wird wieder auf die alte Datenrate zurückprogrammiert usw.. Der Steuerburst-Empfänger SE macht außerdem über die Maskierungssteuerung MS den optischen Empfänger OE für die Zeitdauer des Daten-Bursts transparent, wenn er an die eigene TGAE adressiert ist.

Im Echolaufzeit-Feld des Referenz-Bursts werden außerdem Service-Bits übertragen, die nach erfolgter Laufzeitmessung den sendeseitigen Laufzeitausgleich LA neu programmieren. Beim Laufzeitausgleich handelt es sich um einen elektronischen Speicher mit programmierbarer Tiefe und Durchlaufzeit.

Die Dekompressionsspeicher D1 und D2 erhalten die zeitlich komprimierten Datenpakete aus den Daten- bzw. Steuerburst-Empfängern und setzen diese in zeitkontinuierliche Datenströme um. Die Anpassungseinheit AE ("Line Interface Unit") paßt die Nutz- und Steuerdaten an das Teilnehmerendgerät an.

Das Teilnehmerendgerät gibt zeitkontinuierliche Nutz- und Steuerdaten über die Anpassungseinheit AE an die Kompressionsspeicher K1 und K2 weiter. Die Kompressionsspeicher sammeln die kontinuierlichen Nutz- und Steuerungsdaten, die für ein Paket bestimmt sind, und senden diese zeitlich komprimiert zu den entsprechenden Burst-Generatoren. Diese packen die Nutzdaten mit der Präambel, dem Startwort und der Prüfsumme zusammen in die vorgesehene Paketstruktur. Die Burst-Generatoren erzeugen die Steuer-, Daten- und Referenz-Bursts, die im Multiplexer MX zu einem Datenstrom zusammengefügt werden. Der Laufzeitausgleich LA verschiebt den Sendezeitpunkt dieses Datenstroms so, daß sich die Datenströme aller TGAEs im Sternpunkt vor der ZAE zeitrichtig zu einem kollisionsfreien Zeitmultiplexrahmen zusammensetzen. Im Kanal-Coder KC werden dem Datenstrom über die Leitungs-Codierung Taktinformationen zugefügt. Der optische Sender OS konvertiert das elektrische leitungs-codierte Datensignal in ein optisches Datensignal, welches zur ZAE gesendet wird.

Wie in Fig. 1 dargestellt, werden die optischen Fasern im zugehörigen Kabelverzweiger KVZ mit Hilfe von Sternkopplern zu je einem Bus für die Richtung Vermittlung-Teilnehmer und umgekehrt verschaltet. Die beiden Sternkoppler werden mit einem Faserpaar an eine zentrale Anschalteeinheit ZAE in der Vermittlung angeschlossen. Für größere Entfernungen ist im KVZ zusätzlich ein Repeater mit Amplitudenregeneration vorgesehen.

Das Prinzip des Systems ist, daß zwischen der ZAE und den Teilnehmergruppen-Anschalteeinheiten TGAE regelmäßig Datenblöcke übertragen werden, die eine dauerhafte Kommunikation zwischen allen Endteilnehmern und der Vermittlung ermöglichen.

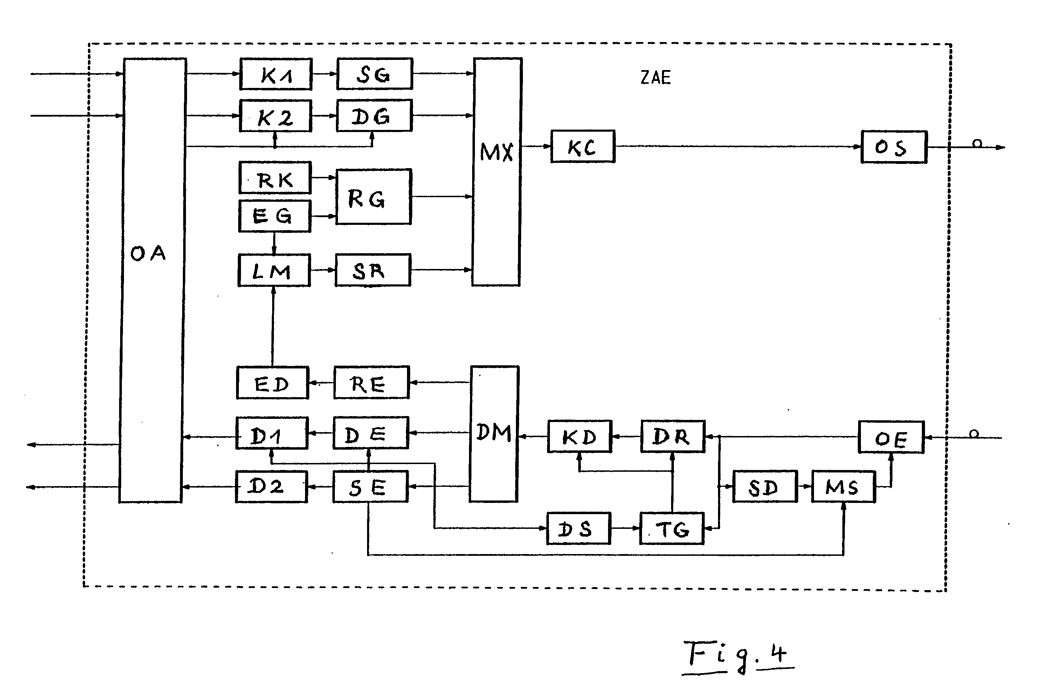

Die Zentrale Anschalteinheit ZAE (s. Fig. 4) ist ganz ähnlich aufgebaut. Der optische Empfänger OE ist ein breitbandiger Empfänger, der verschiedene Datenraten D bearbeiten kann. Aus dem optischen Empfänger gelangt die Datenrate zum Datenregenerator DR. Dieser hat die Aufgabe, zusammen mit der Taktrückgewinnungsschaltung TG die Daten zeitlich zu regenerieren. Die Taktrückgewinnung ist eine programmierbare Einheit, die über die Steuerung "Datenrate" auf eine Datenrate D programmiert wird und für diese Datenrate dann zusammen mit dem Datenregenerator DR eine Regeneration durchführen kann. Der Signaldetektor SD entscheidet, wann ankommende Daten vorhanden sind und teilt das der Maskierungssteuerung MS mit. Diese kann dann zunächst einmal nur die Bursts mit fester Datenrate durchlassen, damit der Empfänger zunächst einmal nachsehen kann, was in den Daten-Bursts, die auf die Steuer-Bursts folgen, gesendet wird, oder mit welcher Datenrate dort gesendet wird.

Der Ablauf ist also wie bei der TGAE folgender: zuerst kommt beispielsweise ein Steuer-Burst mit fester Datenrate, die Taktrückgewinnung wird dann auf diese feste Datenrate programmiert. In diesem Steuer-Burst wird die Datenrate übergeben mit der der darauffolgende Daten-Burst gesendet wird und sobald der Steuer-Burst zu Ende ist, wird unverzüglich die Taktrückgewinnung auf diese neue Datenratenangabe umprogrammiert, so daß darauffolgend mit der im Daten-Burst enthaltenen Datenrate empfangen werden kann. Wichtig hierbei ist, daß bei der ZAE in einem Datenrahmen die Taktrückgewinnungsschaltung fortlaufend umprogrammiert wird, so daß beim Empfang eines Referenz-Bursts oder eines Steuer-Bursts, die mit einer festen Datenrate gesendet werden, die Taktrückgewinnung auf diese feste Datenrate programmiert ist. Beim Wechsel auf einen Daten-Burst wird auf die dann vorhandene Datenrate umprogrammiert. Dies bedeutet für die Taktrückgewinnungsschaltung, daß sie innerhalb der Schutzzeiten vollständig umprogrammierbar ist. Die Schutzzeit ist entsprechend groß zu wählen.

Der Unterschied zwischen der TGAE und ZAE besteht im wesentlichen darin, daß die ZAE einen Referenz-Burst mit dazugehöriger Adresse generiert und diesen zur TGAE sendet. Die adressierte TGAE schließt dann einen Schleifenschalter SL und schickt das Echo dieses Referenz-Bursts an die ZAE zurück. Die ZAE empfängt in ihrem optischen Empfangszweig dieses Echo und mißt die Laufzeit zwischen dem Aussenden des Referenz-Bursts und dem zurückkommenden Echo. Der Steuerrechner SR wertet die gemessene Laufzeit aus und gibt mit bestimmten Bits des Entfernungsmeßworts die Information zur TGAE weiter, die diese benötigt, um den Laufzeitausgleich entsprechend des Meßwertes einzustellen. Somit können alle an eine ZAE angeschlossene TGAEs ihre Rundumlaufzeit, d.h. die Laufzeit zwischen ZAE, TGAE und zurück zur ZAE auf einen einheitlichen Wert einstellen. Damit ist die Nachrichtenübertragung zwischen ZAE und beliebiger TGAE immer auf eine feste Laufzeit normiert.

Ein zusätzlicher Unterschied der ZAE besteht darin, daß das Dateninterface OA in der Regel zu einer Vermittlungsstelle geschaltet ist, während die Anpassungseinheit AE oder "Lineinterface" in der TGAE direkt den Anschluß an die Teilnehmer-Endgeräte herstellt.

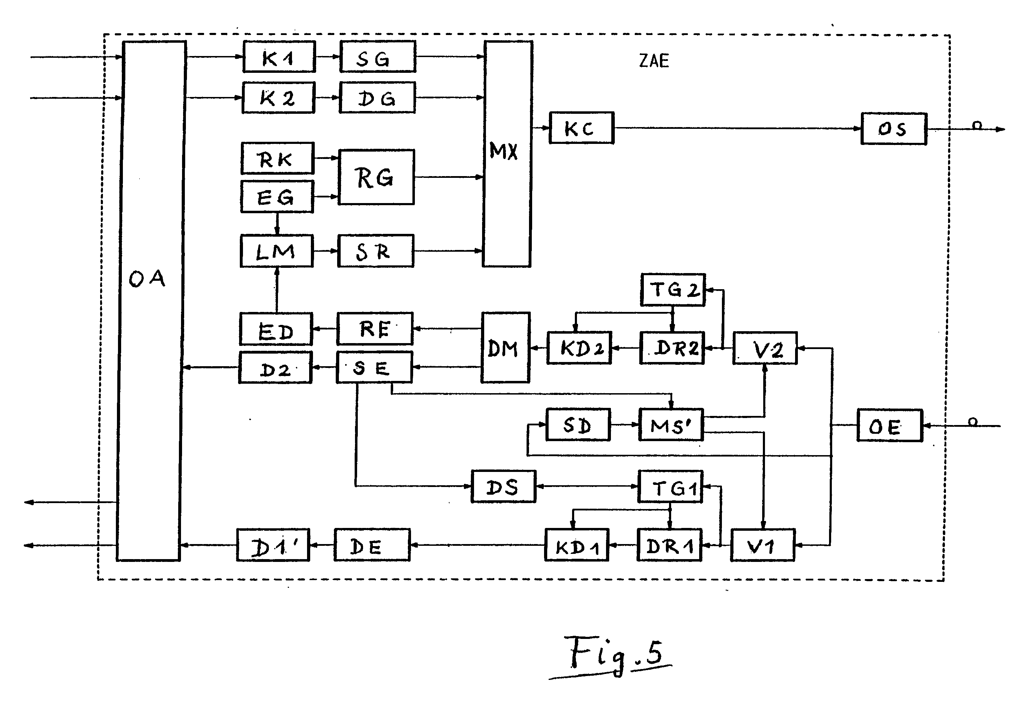

Bei der ZAE in Figur 5 gibt es nach dem optischen Empfänger und Vorverstärker OE 2 getrennte Empfänger-Schaltkreise. Der obere Zweig versteht die feste Datenrate, die im Referenz-Burst und im Steuer-Burst immer vorliegen. Der untere Zweig verarbeitet die jeweils wechselnde Datenrate des Daten-Burst, der jeweils von einem Teilnehmer kommend unterschiedliche Datenrate haben kann. Die Umprogrammierung der Takt-Rückgewinnungsschaltung im unteren Datenzweig ist jetzt in längeren Zeiträumen vorzunehmen, und zwar sobald z.B. Daten-Burst 1 vollständig übermittelt wurde, kann in dem Zeitraum des Steuer-Burst und in der darauffolgenden Schutzzeit die Umprogrammierung für den Empfang des Daten-Burst 2 erfolgen. Diese Zeit ist länger als die Zeit zwischen Steuer-Burst und darauffolgendem Daten-Burst, die in der ZAE als Umprogrammierzeit vorhanden ist.

Damit der Empfänger nicht gestört wird, soll er nur die für ihn relevanten Datenströme verarbeiten. Hierzu wird eine zeitliche Maskierung MS notwendig, die von einem Signal-Detektor SD gesteuert wird. Wenn man die ZAE an den Datenstrom anschaltet, meldet der Signal-Detektor SD, wann Daten vorhanden sind und wann keine Daten vorhanden sind. Da der Referenz-Burst die zeitlich längste Datenübertragung in einem Block darstellt, kann man im Prinzip auch mit dem Signal-Detektor SD direkt die zeitliche Lage des Referenz-Burst ermitteln. Daraufhin wird eine Maske so gesteuert, daß nur der Referenz-Burst und beispielsweise alle Steuer-Bursts zunächst durchgelassen werden. Dies ist nur für die Elektronik-Teilnehmer wichtig. Hier ist zu beachten, daß beispielsweise die Adressen im Steuer-Burst geprüft werden und dann entschieden wird: das ist die eigene Adresse, d.h. die für den Teilnehmer relevante Information vorhanden. Außer diesen Referenz- und Steuer-Bursts werden dann die Bursts mit der Maske freigegeben, die für den jeweiligen Teilnehmer verarbeitet werden müssen.

Die **Bezugszeichenliste** ist beigefügt, um ein besseres Verständnis der Figuren zu ermöglichen:

Fig. 1

| HVT | Hauptverteiler |
| KVZ | Kabelverzweiger |
| HK | Hauptkabel |
| TGAE | Teilnehmergruppenanschalteinheit |
| ZAE | Zentrale Multiplex-Einrichtung |
| $T_1 \ldots T_n$ | Teilnehmer |

Fig. 2

| BE | Belegung (im Steuer-Burst) |
| DA | Daten allgemein |
| DB1 | Datenburst 1 |
| DB | Datenburst allgemein |
| D | Datenrate |
| EMW | Entfernungsmeßwort |
| ELZ | Echolaufzeit |
| PR | Präambel |
| PS | Prüfsumme |
| RB | Referenz-Burst |
| RKW | Rahmenkennungswort |
| S | Schutzzeit |
| SB | (1 ... 32) Steuer-Burst |
| SW | Startwort |
| TY | Typ(e) |
| ZA | Zieladresse |
| ZI | (0,1 ... 32) Zeitintervall |

Fig. 3 bis 5

| AE | Anpassungseinheit |
| DE | Datenburst-Empfänger |
| DG | Datenburst-Generator |
| DM | Demultiplexer |
| DR | Datengenerator |
| DS | Datenraten-Steuerung |

| D1 | Dekompressionsspeicher 1 |
| D2 | Dekompressionsspeicher 2 |
| EG | Entfernungsmeßwort-Generator |
| ED | Entfernungsmeßwort-Detektor |
| KG | Kanal-Coder |
| DK | Kanal-Decoder |
| K1 | Kompressionsspeicher 1 |
| K2 | Kompressionsspeicher 2 |
| LA | Laufzeit-Ausgleich |
| LM | Laufzeit-Meßeinheit |
| MS | Maskierungs-Steuerung |
| MX | Multiplexer |
| OA | Ortsvermittlungs-Anpassung |
| OE | Optischer Empfänger |
| OS | Optischer Sender |
| RE | Referenzburst-Empfänger |
| RG | Referenzburst-Generator |
| RK | Rahmen-Kennwortgenerator |
| SD | Signal-Detektor |
| SE | Steuerburst-Empfänger |
| SG | Steuerburst-Generator |
| SL | Schalter |
| SR | Steuer-Rechner |
| TGAE | Teilnehmergruppen-Anschalteinheit |
| TG | Taktrückgewinnung |
| V1, V2 | Verstärker mit Verstärkungsregelung und Maskierung |

**Patentansprüche**

1. Verfahren zum bidirektionalen Übertragen von Daten zwischen einer zentralen vermittlungsseitigen Multiplex-Einrichtung und mehreren teilnehmerseitigen Multiplex-Einrichtungen, die einerseits über einen passiven Bus miteinander verbunden sind und andererseits Verbindungen zu anderen Teilnehmern herstellen, **dadurch gekennzeichnet,** daß ein periodisch wiederholter Zeitrahmen in feste Zeitintervalle aufgeteilt wird, die über Multiplex-Einrichtungen (ZAE, TGAE) eindeutig einem Teilnehmer zugeordnet sind, und daß in den Zeitintervallen unterschiedliche Datenraten übertragen werden.

2. Verfahren nach Anspruch 1, dadurch gekennzeichnet, daß die Steuerinformation mit einer für die Zentrale und allen Teilnehmerstationen festen Datenrate übertragen wird.

3. Verfahren nach Anspruch 1 oder 2, dadurch gekennzeichnet, daß der Zeitrahmen, welcher von einer Zentralen Multiplex-Einrichtung (ZAE) gesendet wird, zunächst ein Zeitintervall "Null" aufweist, welches den Referenz-Burst (RB) enthält, über den für alle teilnehmerseitigen Multiplex-Einrichtungen (TGAE) der Beginn des Rahmens festgelegt wird.

4. Verfahren nach einem der Ansprüche 1 bis 3, dadurch gekennzeichnet, daß über eine Kennung im Referenz-Burst (RB), ausgehend von einer Laufzeitmessung, die Sendezeitpunkte der den Teilnehmern zugeordneten Zeitintervalle so synchronisiert werden, daß alle kollisionsfrei auf einen passiven Bus zur Zentralen Multiplex-Einrichtung (ZAE) senden.

5. Verfahren nach einem der Ansprüche 1 bis 4, dadurch gekennzeichnet, daß ein Referenz-Burst (RB) den Beginn eines Zeitrahmens mit n + 1 festen Zeitintervallen festlegt und die zur Laufzeitmessung zwischen Zentrale und jeder Teilnehmerstation notwendige Übertragungszeit reserviert.

6. Verfahren nach einem der Ansprüche 1 bis 5, dadurch gekennzeichnet, daß die den Teilnehmern zugeordneten Zeitintervalle einen Steuer-Burst (SB) und einen Daten-Burst (DB) enthalten.

7. Verfahren nach einem der Ansprüche 1 bis 6, dadurch gekennzeichnet, daß der Steuer-Burst (SB) mit der gleichen Rate gesendet wird wie der Referenz-Burst (RB).

8. Verfahren nach einem der Ansprüche 1 bis 7, dadurch gekennzeichnet, daß der Steuer-Burst (SB) Informationen über die Übertragungsrate des im gleichen Zeitintervall gesendeten Daten-Bursts (DB) enthält.

9. Verfahren nach einem der Ansprüche 1 bis 8, dadurch gekennzeichnet, daß der Steuer-Burst (SB) die Teilnehmeradresse enthält, die den im gleichen Zeitintervall gesendeten Daten-Burst (DB) eindeutig diesem Teilnehmer zuordnet.

10. Verfahren nach einem der Ansprüche 1 bis 9, dadurch gekennzeichnet, daß der Steuer-Burst die Länge des im gleichen Zeitintervall gesendeten Daten-Bursts enthält und damit empfängerseitig eine Zeitmaske gesteuert wird.

11. Verfahren nach einem der Ansprüche 1 bis 10, dadurch gekennzeichnet, daß der Referenz-Burst eine Tabelle mit den Übertragungsraten aller in einem Rahmen gesendeten Daten-Bursts enthält.

12. Verfahren nach einem der Ansprüche 1 bis 11, dadurch gekennzeichnet, daß der Referenz-Burst eine Tabelle mit den Zieladressen aller in einem Rahmen gesendeten Daten-Bursts enthält.

13. Verfahren nach einem der Ansprüche 1 bis 12, dadurch gekennzeichnet, daß der Daten-Burst (DB) Daten mit wählbarer Rate für die eigentliche Informationsübertragung enthält.

14. Verfahren nach einem der Ansprüche 1 bis 13, dadurch gekennzeichnet, daß der Referenz-Burst (RB) in der Rückrichtung ein Echosignal zur Laufzeitmessung enthält.

15. Verfahren nach einem der Ansprüche 1 bis 14, dadurch gekennzeichnet, daß der passive Bus mit optischen Elementen realisiert wird.

Fig. 1

Fig. 2

EP 0 447 749 A2

Fig. 3

Fig. 4

Fig.5